# EUROPÄISCHE PATENTSCHRIFT

(11) **EP 1 832 818 B1**
(45) Veröffentlichungstag und Bekanntmachung des Hinweises auf die Patenterteilung: **25.12.2019**
(21) Anmeldenummer: 07004473.0
(22) Anmeldetag: 05.03.2007
(51) Int. Cl.: F24F 12/00, F24F 7/08

(54) **Lüftungsanlage**
Ventilation system
Installation d'aération

(30) Priorität: 06.03.2006 DE 102006010553
(43) Veröffentlichungstag der Anmeldung: 12.09.2007
(73) Patentinhaber: Stiebel Eltron GmbH & Co. KG, 37603 Holzminden (DE)
(72) Erfinder: Hagedorn, Volker, 37073 Göttingen (DE)

(56) Entgegenhaltungen:
- EP-A- 1 134 510
- EP-A- 1 376 023
- EP-A- 1 624 258
- WO-A-2005/036066
- US-A1- 2005 287 945

## Beschreibung

Die vorliegende Anmeldung betrifft eine Lüftungsanlage.

Derartige Lüftungsanlagen weisen typischerweise ein Gehäuse mit einem Wärmetauscher auf, über welchem mittels einem Gebläse Luft gefördert wird. Das Gehäuse weist dabei typischerweise Anschlüsse für Zu-, Ab-, Fort- und/oder Frischluft auf.

Im Folgenden ist als ein Anwendungsbeispiel eine Lüftungsanlage mit einem im Inneren angeordneten Kreuz-Gegenstromwärmetauscher beschrieben, in dem ein Energieaustausch zwischen Ab- und Frischluft erfolgt.

Aus der DE 198 03 335 A1 ist ein Lüftungsgerät für einen Gebäuderaum bekannt, wobei es sich um ein sogenanntes Einzelraumgerät für eine dezentrale Lüftung mit Wärmerückgewinnung handelt. In einem Gehäuse ist ein Formkörper aus schalldämmendem, wärmeisolierendem Material angeordnet, in dem nach vorne offene Luftkanäle vorgesehen sind, wobei Luftleitöffnungen hinten dafür vorgesehen sind, eine Verbindung mit der Frischluft herzustellen. Im Inneren befindet sich ein Wärmetauscher.

Ein Lüftungsgerät zum Be- und Entlüften von Räumen gemäß DE 32 08 392 A1 ist aus schwingungs- und schalldämpfenden und teilflexiblen Materialien gefertigt. Die Front- und Rückseiten weisen abgedeckte Platten mit Öffnungen auf.

Ein Lüftungsgerät mit einem zweischaligen Gehäuse ist aus der DE 85 07 233 bekannt. Es enthält die betriebsnotwendigen Einbaugeräte, wie ein auswechselbarer Luftfilter, ein Elektroheizelement und das Gebläse. Ein hinterer Teil des Innenraumes ist durch eine Trennwand als Luftausblasraum mit mindestens einem Ausblasstutzen abgeteilt.

Ein Lüftungssystem, das unter einem Fenster oder vor einer Außenfassade angeordnet ist und in einer Fußboden- oder Geschossdecken-Aussparung flächenbündig mit dem Fußboden aufgenommen wird, ist aus der DE 101 22 488 bekannt. Mit einer Luftleitklappe ist ein Mischbetrieb für teilweise umgewälzte Raumluft und zugeführte Zuluft über einen Wärmetauscher möglich.

Mit einem Raumlüftungsgerät gemäß DE 102 55 172, das in Modulbauweise zusammengesetzt ist, soll ein Einzelraum belüftet werden. Es soll in einfacher Art und Weise installiert werden können. Ein Basisgerät dient als eigenständiges, voll funktionsfähiges Raumlüftungssystem, in dem eine Steuerungsbaugruppe, eine Kondenswasserführung und ein Kondenswasser-Aufbereitungssystem angeordnet sind. Eine lufttechnische Zusatzbaugruppe ist durch eine Selbstzentrierung durch ihr Eigengewicht auf dem Basisgerät in der Höhe variabel stapelbar.

Ein Raumlüftungsgerät in Modulbauweise für einen Einzelraum mit einem zentralen Anschluss für Frischluft und Fortluft ist aus DE 102 55 172 A1 bekannt. An ein eigenständiges, voll funktionsfähiges Raumlüftungssystem können in sich geschlossene, lufttechnische Zusatzbaugruppen sich selbst zentrierend und sich durch ihr Eigengewicht mittels eingebrachter Dichtmittel gegeneinander abdichtend auf dem Basisgerät in der Höhe stapeln.

Ein zentrales Wohnungslüftungssystem für kontrollierte Wohnungslüftung in einem Niedrigenergiehaus ist aus Zahn, D.: Wer im Treibhaus sitzt... In: sbz. ISSN 1616-2285. 1990, Heft 5/1991, Seite 171, bekannt. Zusätzlich zu einem Abluftanschluss ist ein Anschluss am Gerät für Abgase aus einer fossilen Verbrennung vorgesehen.

Aus EP-A-1376023 ist eine Lüftungsvorrichtung mit einem Gerätegehäuse bekannt. Ein erster Einlassstutzen zum Ansaugen von Luft aus dem Inneren eines Raumes und ein erster Auslassstutzen zum Ausstoßen von Luft an das Rauminnere sind vorgesehen. Weiterhin sind ein zweiter Einlassstutzen zum Ansaugen von Luft von außerhalb des Raumes und ein zweiter Auslassstutzen zum Ausstoßen von Luft an den Außenraum ausgebildet. Ein Zonenbildungselement ist vorgesehen, mit dem das Innere des Gerätegehäuses in einen Luftzufuhrdurchlass und einen Luftablassdurchlass unterteilt ist. Eine Gebläseeinrichtung ist für die Luftzufuhr vorgesehen sowie ein oder mehrere Wärmetauscherelemente sind eingebaut. Führungsschienen sind zum Positionieren und befestigen eines ersten Zonenbildungselements sowie weiterer Bauelemente und zum Führen des Wärmetauscherelementes zu einer festgelegten Position in dem Gehäuse vorgesehen.

Aus dem Stand der Technik sind demnach entweder dezentrale Geräte für Einzelraumlüftung oder Zentralgeräte für mehrere Räume, Wohnungen bzw. Gebäude bekannt.

Es ist somit Aufgabe der vorliegenden Erfindung, eine Lüftungsanlage vorzusehen, welche flexibel in einem Gebäude angeordnet werden kann.

Diese Aufgabe wird durch eine Lüftungsanlage gemäß Anspruch 1 gelöst.

Somit wird eine Lüftungsanlage vorgesehen, welche ein Gehäuse, eine Einschubeinheit und einen ersten und zweiten Luftverteilungskanal aufweist. Der Luftverteilungskanal ist vorzugsweise an einer ersten Seite des Gehäuses angeordnet. Die Lüftungsanlage weist ferner mindestens einen ersten Anschluss auf, welcher jeweils an einer zweiten Seite des Gehäuses angeordnet ist. Dieser erste Anschluss dient zum Zuführen von Frischluft und zum Abführen von Fortluft.

Weitere Ausgestaltungen der Erfindung sind Gegenstand der Unteransprüche.

Nachfolgend werden die Ausführungsbeispiele und Vorteile der Erfindung unter Bezugnahme auf die Zeichnung näher erläutert.
- Fig. 1: zeigt eine perspektivische Ansicht eines Lüftungsgerätes gemäß einem ersten Ausführungsbeispiel,
- Fig. 2: zeigt eine Seitenansicht des Lüftungsgerätes von Fig. 1,
- Fig. 3: zeigt eine Ansicht der Unterseite des Lüftungsgerätes von Fig. 1,
- Fig. 4: zeigt eine Vorderansicht des Lüftungsgerätes von Fig. 1,
- Fig. 5: zeigt den Rahmen des Lüftungsgerätes von Fig. 1,
- Fig. 6: zeigt eine Seitenansicht eines Einschubs über das Lüftungsgerät gemäß Fig. 1,
- Fig. 7: zeigt eine schematische Darstellung von verschiedenen Komponenten des Lüftungsgerätes von Fig. 1,
- Fig. 8: zeigt eine schematische Darstellung der Funktionsweise des Lüftungsgerätes gemäß einem zweiten Ausführungsbeispiel,
- Fig. 9: zeigt eine schematische Darstellung eines Einbaus eines Lüftungsgerätes in einem Gebäude,
- Fig. 10: zeigt eine Schnittansicht eines Gebäudes mit einem eingebauten Lüftungsgerät,
- Fig. 11: zeigt eine perspektivische Ansicht eines Lüftungsgerätes gemäß einem dritten Ausführungsbeispiel,
- Fig. 12: zeigt eine schematische Ansicht einer Einschubeinheit 400 mit dem Wärmetauscher 201,
- Fig. 13: zeigt eine schematische Darstellung der Luftverteilungskanäle gemäß einem dritten Ausführungsbeispiel,
- Fig. 14: zeigt eine schematische Darstellung der Lüftungskanäle gemäß dem dritten Ausführungsbeispiel,
- Fig. 15: zeigt eine schematische Darstellung der Lüftungskanäle gemäß dem dritten Ausführungsbeispiel,
- Fig. 16: zeigt eine schematische Darstellung der Einschubeinheit 400, und
- Fig. 17: zeigt eine schematische Darstellung des Lüftungsgerätes gemäß dem dritten Ausführungsbeispiel.

Die hier beschriebenen Lüftungsgeräte bzw. Lüftungsanlagen werden typischerweise an einer Wand, einer Decke oder am Fußboden beispielsweise mittels Gewindebolzen in einem Gebäude montiert. Das Gehäuse des Lüftungsgerätes kann beispielsweise aus Blechen, Kunststoffplatten oder aus einem Rahmen hergestellt werden, welche innen oder außen mit einem schall- und wärmeisolierenden Material ausgestattet sein können.

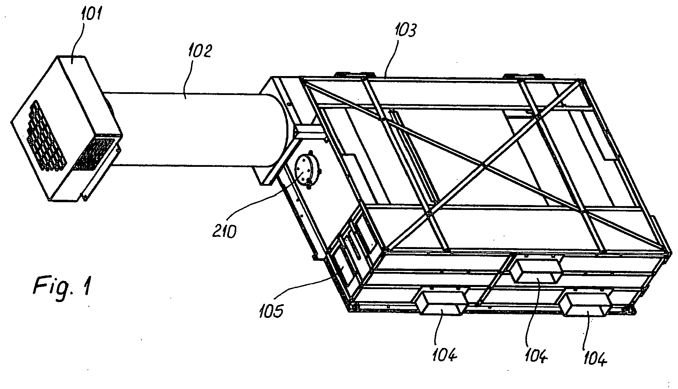

Fig. 1 zeigt eine perspektivische Ansicht eines Lüftungsgerätes gemäß einem ersten Ausführungsbeispiel. Das Gerät weist eine Außenwanddurchführung 102 (vorzugsweise mit einem Außenwandaufsatz 101) für Frisch- und/oder Fortluft auf. Die weiteren Komponenten des Lüftungsgerätes sind in einem Rahmen 103 angeordnet. An der Längsseite des Gerätes sind einige Anschlussmöglichkeiten 104 für Zuluft- bzw. Abluftkanäle vorhanden. An einer Stirnseite des Gerätes sind weitere Anschlussmöglichkeiten 105 für Zuluft- bzw. Abluftkanäle vorgesehen.

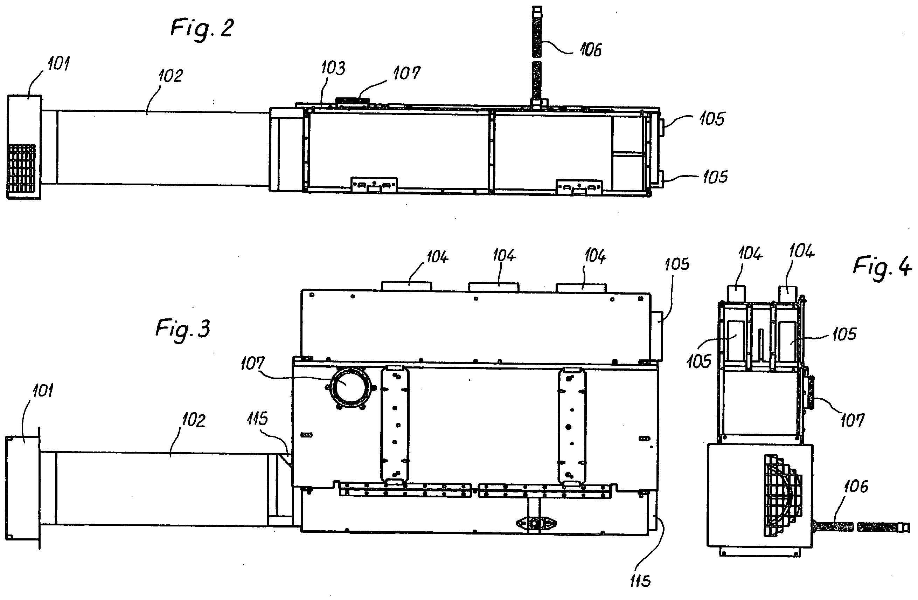

Fig. 2 zeigt eine seitliche Ansicht des Lüftungsgerätes von Fig. 1. Zusätzlich zu den in Fig. 1 gezeigten Elementen ist ein Anschluss 107 für Abluft und eine Leitung 106 für Kondensat vorgesehen. Diese beiden Elemente sind vorzugsweise an der Unterseite des Gerätes angeordnet. Bei einem Anschluss der Leitung 106 nach oben wird das Kondensat mit einer Pumpe gefördert. Der Anschluss 107 dient vorzugsweise als direkter Anschluss für Abluft in einem Bad.

Fig. 3 zeigt eine Ansicht der Unterseite des Lüftungsgerätes von Fig. 1. Das Lüftungsgerät weist an seiner Unterseite einen Anschluss für Abluft 107 auf.

Das Lüftungsgerät weist an seinen beiden Stirnseiten jeweils einen Anschluss 115 auf, an welchem die Außenwanddurchführung 102 angeschlossen werden kann. Wenn die Außenwanddurchführung 102 an der linken Stirnseite angeschlossen wird, so kann der Anschluss 115 entsprechend verschlossen werden oder bleibt verschlossen.

Fig. 4 zeigt eine Ansicht der Vorderseite des Lüftungsgerätes. Das Lüftungsgerät weist Anschlusspositionen 104, 105 für Zuluftkanäle sowie einen Anschluss für Abluft 107 auf.

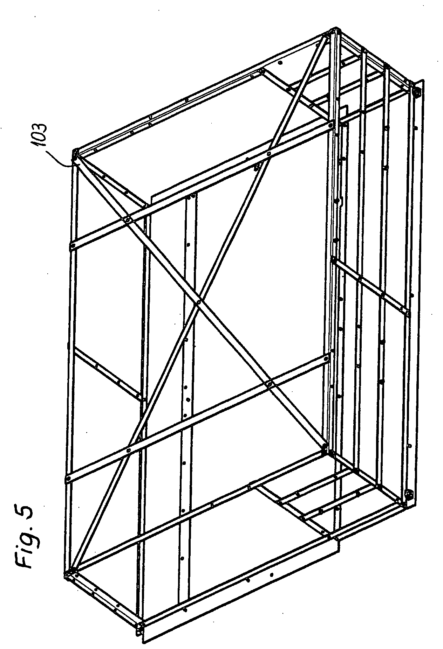

Fig. 5 zeigt eine perspektivische Ansicht eines Rahmens des Lüftungsgerätes von Fig. 1. Der Rahmen 103 ist aus einer Vielzahl von Streben aufgebaut und kann die weiteren Elemente des Lüftungsgerätes aufnehmen.

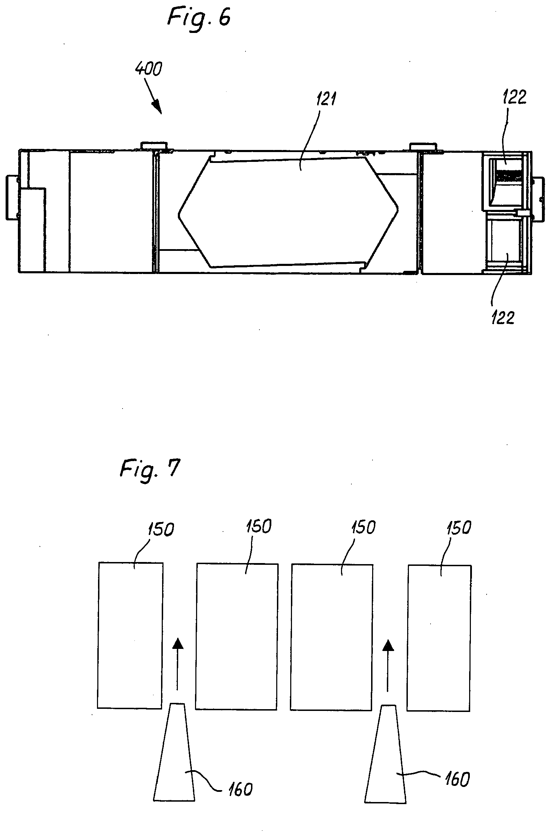

Fig. 6 zeigt eine Seitenansicht eines Einschubs 400 für das Lüftungsgerät von Fig. 1. Der Einschub 400 weist eine Aufnahmemöglichkeit 121 für einen Wärmetauscher sowie wenigstens einen Lüftungskanal 122 auf. Die Aufnahme 121 ist leicht angeschrägt ausgestaltet, damit das Kondensat des Wärmetauschers ablaufen kann.

Das Lüftungsgerät weist vorzugsweise eine Wartungsklappe an seiner unteren Seite auf. Die einzelnen Bauelemente sind durch Verriegelungen gegen ein Herausfallen gesichert. Der Blechrahmen 103 weist einige Blechstreifen auf, welche in die Wartungsöffnung hineinragen. Durch Einschieben der entsprechenden Elemente des Heizungsgerätes in das Gerät und durch eine horizontale Verschiebung im Gerät können alle Teile gegen ein Herausfallen gesichert werden.

Fig. 7 zeigt eine schematische Darstellung des Zusammenwirkens von verschiedenen Elementen eines Lüftungsgerätes.

Der Wärmetauscher weist eine flächige Abdichtung zu den angrenzenden Teilen an seiner gesamten Rahmenstellfläche auf. Somit wird eine lineare Kraftaufbringung, eine Verpressung, auf die Randflächen der Einströmöffnung vorgesehen, wodurch eine zuverlässige Dichtheit erreicht werden kann. Wenn dies nicht erfolgt, so kann es zu Leckageproblemen führen, da die Wärmetauscherkonstruktion an anderen Stellen weniger steif ausgestaltet ist.

Um eine Abdichtung, insbesondere eine flächige Abdichtung, zwischen den verschiedenen Elementen 150 des Gerätes sowie des Wärmetauschers zu erhalten, werden keilförmig ausgestaltete Filterschubladen 160 von unten zwischen die verschiedenen Elemente 160 eingeführt. Die Filterschubladen 160 werden beispielsweise für einen Filterwechsel nach unten aus dem Gerät herausgezogen. Beim erneuten Einschieben wird durch ihre keilförmige Ausgestaltung eine Kraft auf die jeweiligen Elemente des Gerätes sowie des Wärmetauschers ausgeübt, um die oben beschriebene Abdichtung bzw. die flächige Abdichtung zu erhalten.

Durch die Ausgestaltung der verschiedenen Anschlusspositionen 104, 105 können externe Luftkanäle variabel an das Lüftungsgerät angeschlossen werden. Somit können Frisch- und Fortluftanschlüsse wahlweise an zwei verschiedenen Seiten des Gerätes angeschlossen werden.

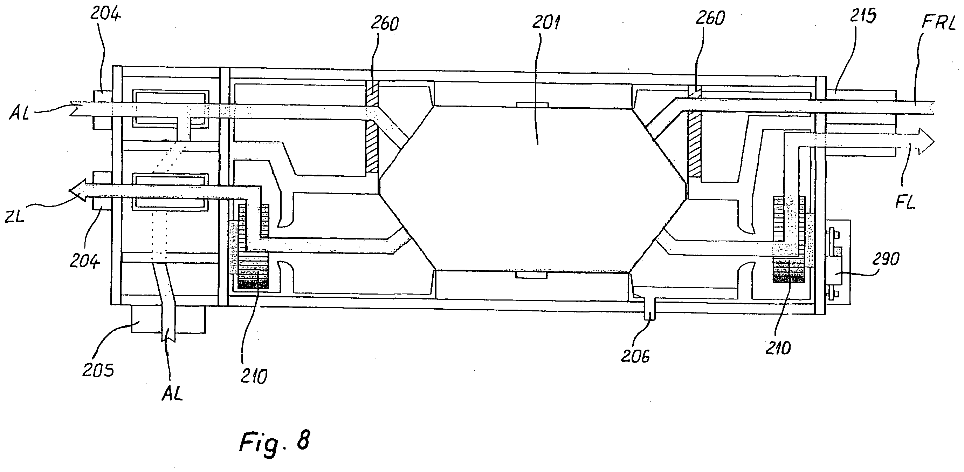

Fig. 8 zeigt eine schematische Darstellung der Funktionsweise eines Lüftungsgerätes gemäß einem zweiten Ausführungsbeispiel. Das Lüftungsgerät weist einen Anschluss 215 für eine Außenwanddurchführung sowie mehrere Anschlüsse 204, 205 für Abluft und Zuluft auf, wobei die Anschlüsse für Abluft und Zuluft 204, 205 an der dem Anschluss 205 gegenüberliegenden Seite angeordnet sind. Frischluft FRL wird über den Anschluss 215 durch einen Filter 260 durch den Kreuzgegenstrom-Wärmetauscher 201 geleitet. Die von dem Wärmetauscher 201 erwärmte Luft wird als Zuluft ZL vorzugsweise über einen Zuluftventilator 210 durch einen Anschluss 204 geblasen. Die Abluft AL aus einem oder mehreren Räumen kann durch die entsprechenden Anschlüsse 204, 205 in das Lüftungsgerät eintreten. Die Anschlüsse 204, 205 für die Abluft AL sind miteinander verbunden, und die gesamte Abluft wird dann durch einen Filter 260 dem Wärmetauscher 201 zugeführt, wo die Wärme der Abluft auf die eintretende Frischluft übertragen wird. Die abgekühlte Abluft wird dann vorzugsweise über einen Fortluftventilator 210 über den Anschluss 215 als Fortluft FL beispielsweise über eine Außenwanddurchführung nach außen abgegeben.

Wie bereits oben beschrieben können die Filter 260 als keilförmig ausgestaltete Filterschubladen ausgebildet werden.

Der Wärmetauscher 201 ist vorzugsweise ein wenig zu dem Kondensatablauf 206 geneigt, um somit ein Ablaufen des Kondensats über den Kondensatablauf 206 zu ermöglichen.

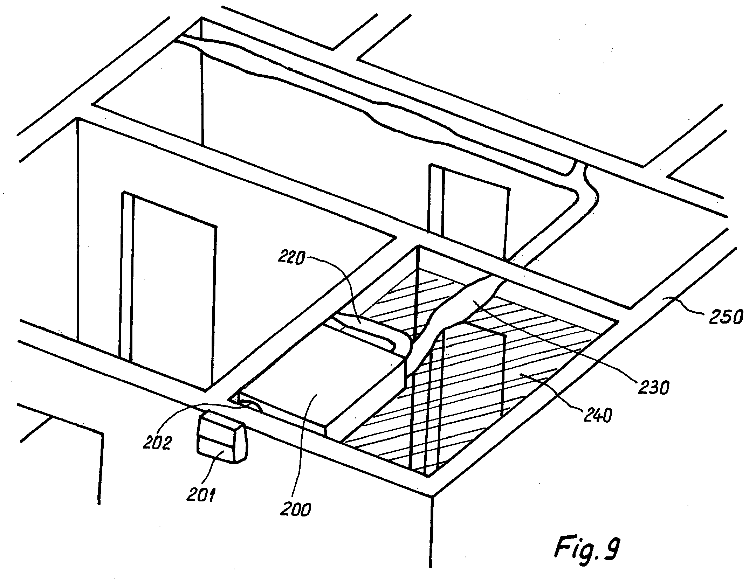

Fig. 9 zeigt eine perspektivische Ansicht eines in einem Gebäude installierten Lüftungsgeräts. Das Lüftungsgerät 200 wird in einer Ecke eines Raumes an der Decke oder in der Nähe der Decke montiert. Über eine Außenwanddurchführung 202 ist das Gerät mit einem Außenwandaufsatz 201 an der Außenwand verbunden. An der anderen Seite des Gerätes sind mehrere Lüftungskanäle 220, 230 angeordnet, welche in unterschiedliche Räume in dem Gebäude führen. Das Lüftungsgerät 200 ist vorzugsweise mit jedem Raum in der Wohnung oder in dem Gebäude verbunden. Um das Lüftungsgerät sowie die Lüftungskanäle 220, 230 zu verstecken, kann eine Zwischendecke 240 vorgesehen werden.

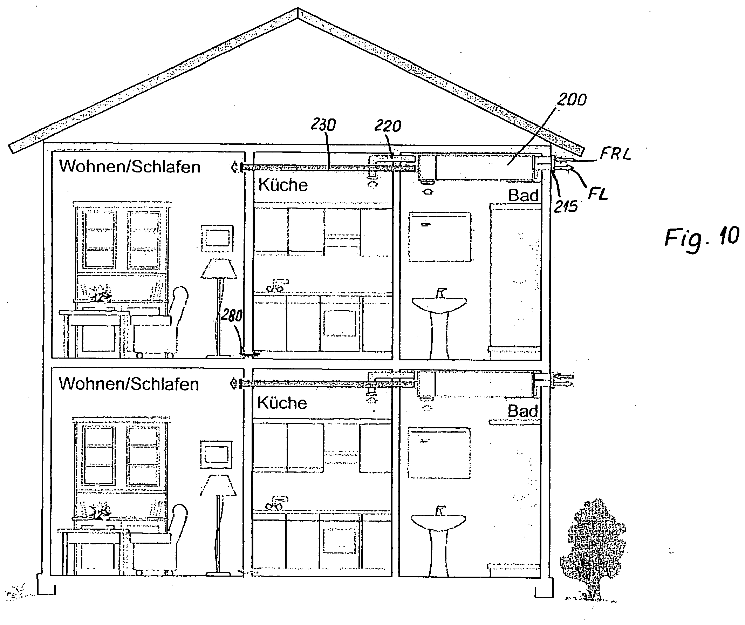

Fig. 10 zeigt eine Schnittansicht eines Gebäudes mit einem Lüftungsgerät gemäß einem der Ausführungsbeispiele der Erfindung. Das Lüftungsgerät 200 ist vorzugsweise in einem Bad an der Decke montiert. Die Lüftungskanäle 230, 220 verbinden jeden Raum der Wohnung mit dem Lüftungsgerät 200. Über eine Außenwanddurchführung 215 ist das Gerät mit der Außenseite gekoppelt, so dass Frischluft FLR zugeführt und Fortluft FL abgeführt werden kann. Um einen Über- bzw. Unterdruck in dem Räumen zu vermeiden, können Lüftungsschlitze oder Lüftungsöffnungen 280 in dem Boden bzw. im unteren Bereich der Zwischenwände vorgesehen werden.

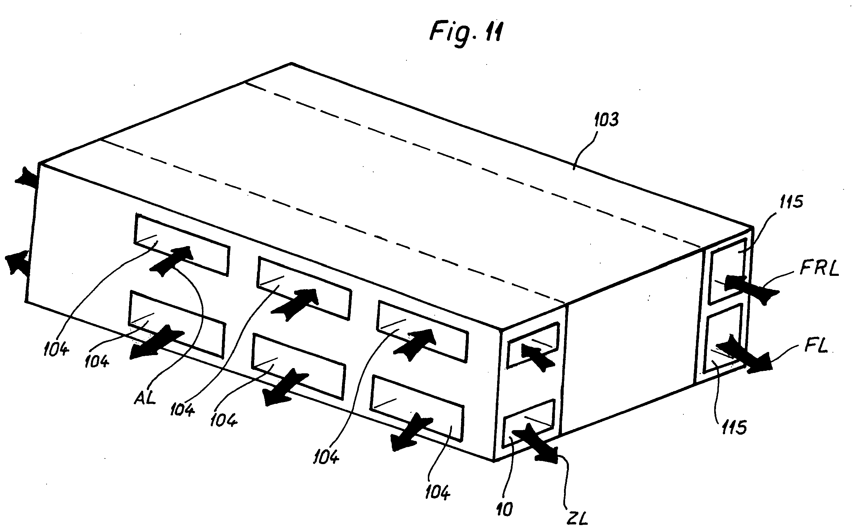

Fig. 11 zeigt eine perspektivische Ansicht eines Lüftungsgerätes gemäß einem dritten Ausführungsbeispiel. Das Lüftungsgerät weist ein Gehäuse 103 auf, welches eine Einschubeinheit 400 aufweist, welche dazu ausgestaltet ist, den Wärmetauscher aufzunehmen. Links und rechts von der Einschubeinheit sind jeweils an der Längsseite des Lüftungsgerätes zwei Lüftungskanäle gezeigt. In den Lüftungskanälen sind Öffnungen 104 angeordnet. Entsprechend den Montagebedingungen werden die jeweiligen Öffnungen 104 ausgewählt. Die anderen Öffnungen werden dann entsprechend verschlossen oder bleiben verschlossen. Während die oberen Öffnungen 104 für die Abluft AL verwendet werden, werden die unteren Öffnungen für die Zuluft ZL verwendet. Alternativ dazu kann dies auch umgedreht werden. An der Stirnseite des Gerätes sind ebenfalls Öffnungen 105 vorgesehen, welche sowohl für die Abluft AL als auch für die Zuluft ZL verwendet werden können. Auf der Innenseite der Kanäle sind ebenfalls zwei Öffnungen, vorzugsweise an den Endungen der Kanäle, angeordnet. Mittels dieser Öffnungen und den Lüftungskanälen wird die entsprechende Luft dem Wärmetauscher zugeführt bzw. abgeführt.

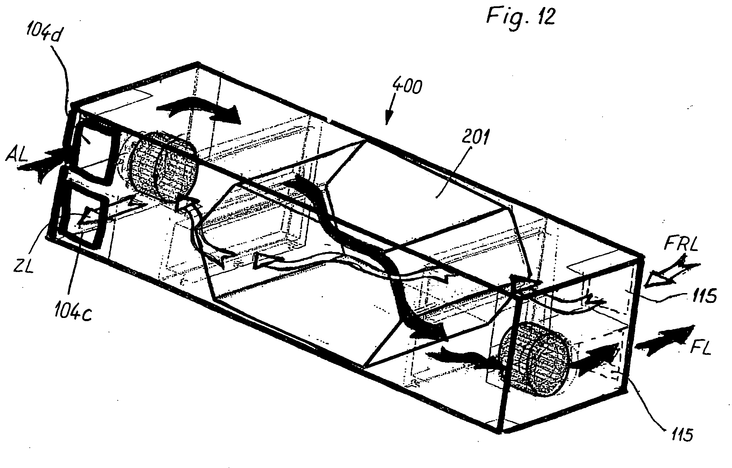

Fig. 12 zeigt eine schematische Ansicht einer Einschubeinheit 400 mit dem Wärmetauscher 201. Die obere Öffnung 115d wirkt mit Öffnungen auf der Innenseite der Kanäle zusammen und dient dazu, Frischluft FRL anzusaugen, welche durch den Wärmetauscher 201 geführt wird und als Zuluft ZL aus dem Gerät wieder austritt. Die Abluft AL wird durch eine Öffnung 104d angesaugt, durch den Wärmetauscher geführt und als Fortluft aus dem Gerät ausgegeben.

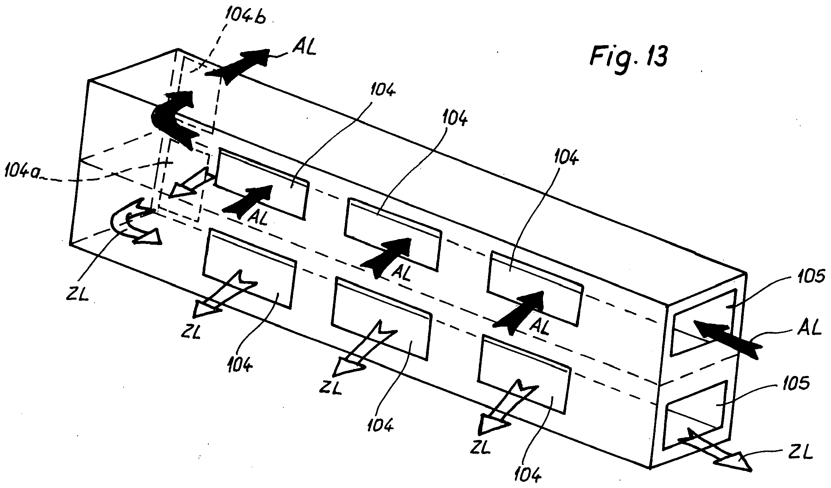

Fig. 13 zeigt eine schematische Darstellung der Luftverteilungskanäle gemäß einem dritten Ausführungsbeispiel. Die Luftverteilungskanäle weisen eine Vielzahl von Öffnungen 104 an ihrer Längsseite sowie mindestens zwei Öffnungen 105 jeweils an ihrer Stirnseite auf. Die Zuluft wird durch die Öffnung 104a an der Innenseite angesaugt und tritt durch die Öffnungen 104 und/oder 105 wieder aus. Die Abluft AL wird durch die obere Öffnung 104 und/oder 105 angesaugt und durch die Öffnung 104b an der Innenseite ausgegeben.

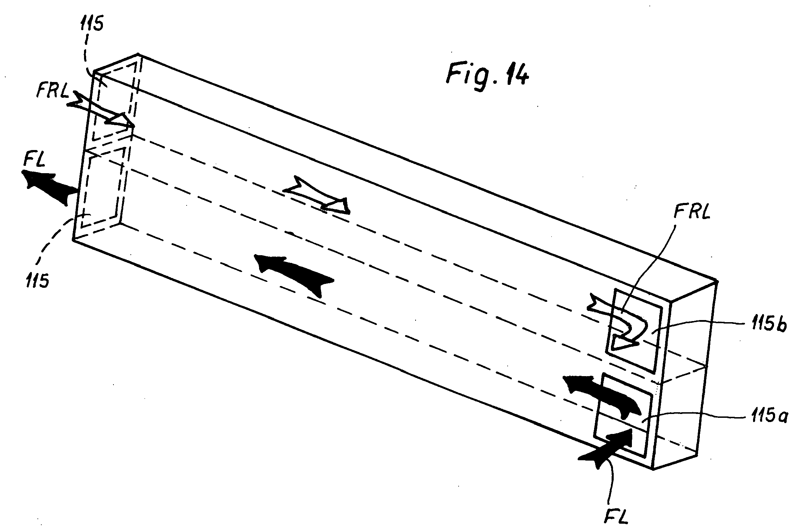

Fig. 14 zeigt eine schematische Darstellung der Lüftungskanäle gemäß dem dritten Ausführungsbeispiel. Fortluft FL wird durch die untere Öffnung 115a angesaugt und durch die untere Öffnung 115 wieder abgegeben. Die Frischluft FRL wird durch die obere Öffnung 115 angesaugt und durch die obere Öffnung 115b auf der Innenseite wieder abgegeben.

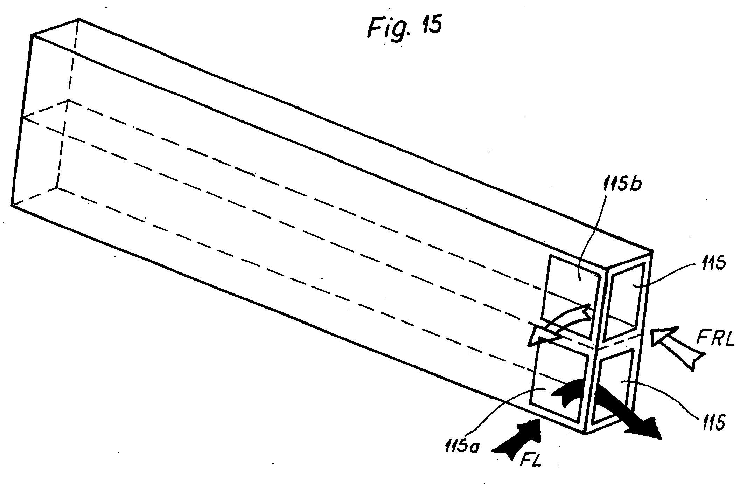

Fig. 15 zeigt eine schematische Darstellung der Lüftungskanäle gemäß dem dritten Ausführungsbeispiel. Hierbei wird die Frischluft FRL durch die obere Öffnung 115 angesaugt und sofort durch die obere Öffnung 115b auf der Innenseite ausgegeben. Die Fortluft FL wird durch die untere innere Öffnung 115a eingesaugt und durch die untere Öffnung 115 wieder abgegeben.

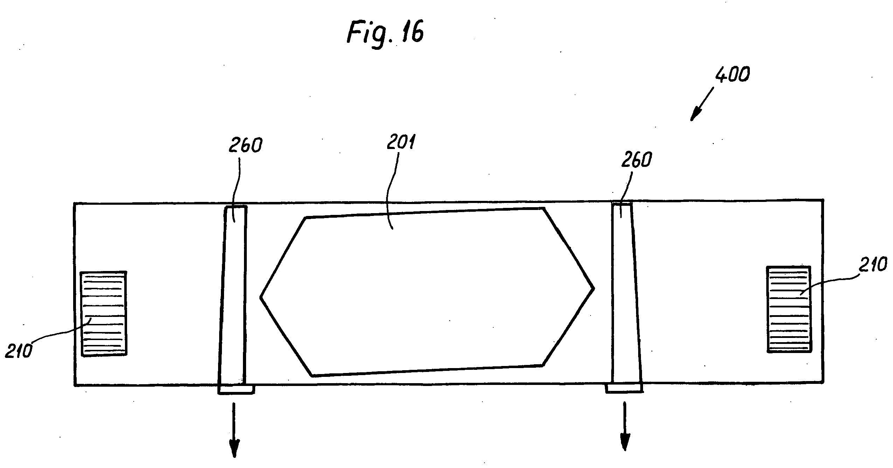

Fig. 16 zeigt eine schematische Darstellung der Einschubeinheit 400. Die Einschubeinheit gemäß dem dritten Ausführungsbeispiel weist einen Zuluftventilator 210 und einen Fortluftventilator 210 auf. Ferner ist der Kreuzgegenstrom-Wärmeaustauscher 201 ein wenig geneigt in der Einschubeinheit angeordnet. Links und rechts von dem Wärmetauscher 201 sind keilförmige Filtereinschübe 260 gezeigt, welche zur Wartung oder zur Reinigung in Pfeilrichtung herausgezogen werden können.

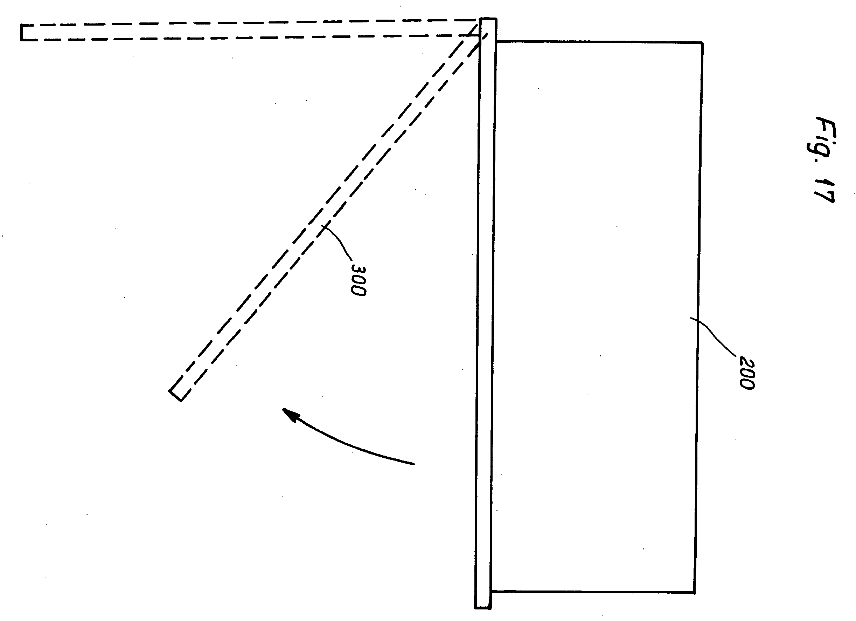

Fig. 17 zeigt eine schematische Darstellung des Lüftungsgerätes 200 gemäß dem dritten Ausführungsbeispiel. Das Lüftungsgerät 200 weist eine Klappe 300 auf, welche nach unten aufgeklappt werden kann, so dass die einzelnen Elemente der Einschubeinheit, beispielsweise die Filterelemente, herausgenommen werden können, beispielsweise damit sie gereinigt bzw. gewartet werden können.

Das erfindungsgemäße Lüftungsgerät 200 bzw. die erfindungsgemäße Lüftungsanlage weist eine Einschubeinheit 400 auf, welche beispielsweise den Wärmetauscher 201 sowie die Filtereinheiten 260 aufnehmen kann. Ferner kann die Einschubeinheit die entsprechenden Zuluft- bzw. Fortluftventilatoren 210 aufweisen. Links und rechts neben der Einschubeinheit, d. h. vorzugsweise an der Längsseite des Gehäuses, sind jeweils zwei Lüftungskanäle bzw. Luftverteilungskanäle angeordnet. Diese Luftverteilungskanäle weisen jeweils eine Anschlussmöglichkeit 105 und/oder Anschlussmöglichkeit 115 an ihren beiden Stirnseiten sowie mehrere Anschlussmöglichkeiten 104 außen an ihrer Längsseite auf. Um eine Verbindung mit der Einschubeinheit zu gewährleisten, weisen die Luftverteilungskanäle jeweils eine Öffnung auf ihrer Innenseite an ihren beiden Enden auf. Alle diese Öffnungen können entsprechend der Einbau- bzw. Montagesituation verschlossen werden, so dass eine hohe Variationsmöglichkeit hinsichtlich der Anschlüsse gegeben ist. Die Öffnungen werden in einer alternativen Ausführung soweit benötigt herausgebrochen oder geknackt, wobei die nicht benötigten Öffnungen verschlossen bleiben. Das Herausbrechen wird in vorteilhafter Weise durch Prägungen, Perforationen o.ä. ermöglicht. Bei der Verwendung von Styropor ist es besonders leicht Sollbruchstellen vorzusehen, die durch Verminderung der Materialstärke erzeugt werden. Dennoch bleibt die Wand bei nicht benötigten Öffnungen vollständig geschlossen, was ein Vorteil gegenüber einer Perforation ist.

Die oben beschriebenen Anschlussmöglichkeiten auf der Innenseite der Lüftungskanäle (vorzugsweise jeweils an den beiden Enden angeordnet) korrespondieren mit entsprechenden Öffnungen in der Einschubeinheit, so dass die entsprechende Luftzirkulation gewährleistet ist.

Insbesondere in Fig. 13 sind sowohl die Anschlüsse in den Lüftungskanälen nach außen (104, 105) als auch nach innen (104a, 104b) gezeigt. Die inneren Anschlussmöglichkeiten 104a, 104b dienen dazu, die Lüftungskanäle mit den entsprechenden Öffnungen in der Einschubeinheit zu verbinden.

## Patentansprüche

1. Lüftungsanlage, mit
einem Gehäuse (103),
einer Einschubeinheit (400), welche einen Wärmetauscher (201) aufweist,
einem ersten und einem zweiten Luftverteilungskanal, welche jeweils eine Stirnseite aufweisen und innerhalb des Gehäuses und entlang einer ersten Seite des Gehäuses (103) angeordnet sind,
mindestens einem ersten Anschluss (115, 215), welcher jeweils an einer zweiten Seite des Gehäuses (103) angeordnet ist und mit einem Anschluss an einer Stirnseite des ersten oder zweiten Luftverteilungskanals zusammenwirkt, zum Zuführen von Frischluft (FRL) und zum Abführen von Fortluft (FL),
mindestens einem weiteren Element (150),
**dadurch gekennzeichnet,**
**dass** mindestens ein keilförmiger Filtereinschub (160, 260) zwischen dem mindestens einen weiteren Element (150) und dem Wärmetauscher (201) angeordnet ist.

2. Lüftungsanlage nach Anspruch 1, mit mindestens einem zweiten Anschluss entlang des zweiten Luftverteilungskanals und/oder an der zweiten Seite des Gehäuses.

3. Lüftungsanlage nach Anspruch 1, mit mindestens einem zweiten Anschluss entlang des ersten und zweiten Luftverteilungskanals und/oder an der zweiten Seite des Gehäuses.

4. Lüftungsanlage nach einem der Anspruche 1, 2 oder 3, wobei an der Unterseite ein dritter Anschluss (107) für Abluft (AL) vorhanden ist.

5. Lüftungsanlage nach einem der vorherigen Anspruche, ferner mit einer nach unten aufklappbaren Klappe (300).

6. Lüftungsanlage nach einem der vorherigen Ansprüche, wobei die Luftverteilungskanale eine Vielzahl von Anschlussmöglichkeiten an ihrer Außenwand sowie mindestens zwei Anschlussmöglichkeiten an ihrer Innenwand aufweisen.

## Claims

1. Ventilation system, comprising
a casing (103),
a plug-in unit (400), which comprises a heat exchanger (201),
a first and a second air distribution duct with at least two connector points for supply air ducts and/or at least two connector points for extract air ducts, which are arranged on a first side of the casing (103), and
at least one first connector (115, 215), which is arranged respectively on a second side of the casing (103), for supplying fresh air (FRL) and for removing exhaust air (FL).

2. Ventilation system according to claim 1, comprising at least one second connector along the second air distribution duct and/or on the second side of the casing.

3. Ventilation system according to claim 1, comprising at least one second connector along the first and second air distribution duct and/or on the second side of the casing.

4. Ventilation system according to any of claims 1, 2 or 3, wherein on the underside a third connector (107) is provided for extract air (AL).

5. Ventilation system according to any of the preceding claims, comprising at least one wedge-shaped filter unit (160, 260).

6. Ventilation system according to any of the preceding claims, wherein the air distribution ducts comprise a plurality of connector points on their external wall and at least two connector points on their inner wall.

## Revendications

1. Installation de ventilation, comportant
un boîtier (103),
une unité de cartouche (400) qui présente un échangeur de chaleur (201),
un premier et un deuxième canal de répartition d'air avec au moins deux possibilités de raccordement pour des canaux d'air entrant et/ou au moins deux possibilités de raccordement pour des canaux d'air sortant, qui sont disposés sur un premier côté du boîtier (103), et
au moins un premier raccord (115, 215), disposé sur un deuxième côté du boîtier (103), destiné à faire entrer l'air frais (FRL) et à faire sortir l'air évacué (FL).

2. Installation de ventilation selon la revendication 1, comportant au moins un deuxième raccord le long du deuxième canal de répartition d'air et/ou sur le deuxième côté du boîtier.

3. Installation de ventilation selon la revendication 1, comportant au moins un deuxième raccord le long du premier et du deuxième canal de répartition d'air et/ou sur le deuxième côté du boîtier.

4. Installation de ventilation selon l'une des revendications 1, 2 et 3, dans laquelle un troisième raccord (107) pour l'air sortant (AL) est disponible sur la face inférieure.

5. Installation de ventilation selon l'une des revendications précédentes, comportant
au moins une unité de filtre en forme de coin (160, 260).

6. Installation de ventilation selon l'une des revendications précédentes, dans laquelle les canaux de répartition d'air présentent une pluralité de possibilités de raccordement sur leur paroi extérieure ainsi qu'au moins deux possibilités de raccordement sur leur paroi intérieure.
